Europäisches Patentamt

(19) European Patent Office

Office européen des brevets

(11) Publication number : **0 358 306 B1**

(12) **EUROPEAN PATENT SPECIFICATION**

(45) Date of publication of patent specification :
02.09.92 Bulletin 92/36

(51) Int. Cl.⁵ : **C09D 133/06,**
// (C09D133/06, 163:00)

(21) Application number : 89306447.7

(22) Date of filing : 26.06.89

(54) **Multi-component coating composition comprising an anhydride containing polymer, a glycidyl component and a polymer with multiple hydroxyl groups.**

The file contains technical information
submitted after the application was filed and
not included in this specification

(30) Priority : 27.06.88 US 212052

(43) Date of publication of application :
14.03.90 Bulletin 90/11

(45) Publication of the grant of the patent :
02.09.92 Bulletin 92/36

(84) Designated Contracting States :
AT BE CH DE ES FR GB IT LI NL SE

(56) References cited :
EP-A- 0 225 097

(73) Proprietor : E.I. DU PONT DE NEMOURS AND
COMPANY
1007 Market Street
Wilmington Delaware 19898 (US)

(72) Inventor : **Barsotti, Robert J.**
**RD 2 Box 163 A Coles Mill Road**
**Franklinville New Jersey 08322 (US)**
Inventor : **Corcoran, Patrick Henry**
**25 Laurel Hill Drive**
**Cherry Hill New Jersey 08003 (US)**
Inventor : **Altschuller, Lili W.**
**538 North Wynnewood Avenue**
**Wynnewood Pennsylvania 19096 (US)**
Inventor : **White, Donald A.**
**23 Lorkim Lane**
**Atco New Jersey 08004 (US)**

(74) Representative : **Woodcraft, David Charles et
al**
**BROOKES & MARTIN High Holborn House**
**52/54 High Holborn**
**London, WC1V 6SE (GB)**

## Description

This invention is related to a multi-component coating composition.

There are a wide variety of multi-component coating compositions available for finishing substrates. Typically with these compositions, the components are mixed together before application and then the resulting composition is applied by conventional techniques such as spraying and the composition is cured at ambient temperatures or can be cured at elevated temperatures. These compositions are used to finish original equipment, automobiles and trucks, refinish automobiles and trucks, paint structures such as bridges and buildings, paint appliances, metal cabinets and the like.

Representative of such compositions are shown in the following patents:

Gordon et al. U.S. Patent 4,507,411, issued March 26, 1985 shows a two component composition of a functionalized polymeric component and glycidyl component that in the presence of an amine, alcohol, ketimine, acetal or oxazolidine cures at ambient temperatures. However, the compositions disclosed are not useful for finishes for automobiles and trucks.

European Patent Application 0,123,793 shows a two component composition in which one component has an anhydride ring that is open with an amine and has a second component that contains glycidyl groups. Finishes formed from such compositions are not useful for automobiles and trucks since the finishes whiten and blister on exposure to high humidity conditions and exhibit recoat lifting when repaired within several days after the finish has been applied.

U.S. Patent 3,136,736 issued June 9, 1964 to Wyncote et al and British patent 994,881 assigned to Rohm & Haas concern coating compositions comprising polyepoxides and maleic anhydride copolymers. The patents do not teach or suggest the use of a hydroxy functional material.

U.S. Patent 4,732,791 issued March 22, 1988, to Blackburn et al concerns a coating composition comprising polyepoxides, a monomeric anhydride curing agent and a low number average molecular weight hydroxyl group containing polyfunctional material. However, the composition disclosed must be heated to cure and contains monomeric anhydrides rather than polymeric anhydrides.

There is a need for a coating composition that cures at ambient temperatures and provides a high quality finish that is useful as an exterior finish or refinish for automobiles and trucks that has excellent adhesion to the substrate to which it is applied, good outdoor weatherability and humidity resistance and an excellent appearance.

Furthermore, because of environmental concerns about volatile organic components (VOC's) there is a need for such a coating composition with a high solids content which retains its sprayability. Many previous multi-component coating compositions have had to have a solids content of less than 35 percent to ensure sprayability. There is a need for a sprayable coating composition with a solids content of greater than 55 percent which retains an excellent mix of other desirable coating composition qualities such as pot life, hardness, durability and humidity resistance. EP 225 097 Du Pont discloses a coating composition comprising 20 - 80% by weight binder and 80 - 20% by weight organic carrier, the binder comprises:

a) an anhydride acrylic polymer having at least two reactive anhydride groups and a weight average molecular weight of about 2,000 - 50,000;

b) a glycidyl component having at least two glycidyl groups, and

0.1 - 5% by weight of the binder of catalyst.

According the invention there is provided a coating composition comprising 20-80% by weight of reactive binder components and 80-20% by weight of an organic liquid carrier; the binder comprising:

a) 25-90% by weight, based on the weight of the binder, of an anhydride acrylic polymer having at least two reactive anhydride groups and consists of polymerized monomers of an ethylenically unsaturated anhydride or an ethylenically unsaturated dicarboxylic acid and polymerized monomers selected from the group consisting of alkyl methacrylate, alkyl acrylate and any mixture thereof, wherein the alkyl groups have 1-8 carbon atoms and the polymer has a weight average molecular weight of about 2,000 - 50,000;

b) 5-50% by weight, based on the weight of the binder, of a glycidyl component having at least two reactive glycidyl groups;

c) 5 to 50% of a polymeric component containing multiple hydroxy groups selected from the group consisting of acrylic polyols, polyester polyols, polyesterurethane polyols, polyether polyols, acrylourethane polyols and any mixtures thereof and having a weight average molecular weight average molecular weight of 3,000 to 20,000; and

the composition contains about 0.1-5% by weight, based on the weight of the binder, of a catalyst.

In the coating composition of claim 4, the anhydride acrylic polymer (a) consist essentially of 20-40% by weight, based on the weight of the acrylic polymer of methyl methacrylate, styrene or mixture of methyl methacrylate and styrene, 35-55% by weight of an alkyl methacrylate or an alkyl acrylate having 2-4 carbon atoms in the alkyl group and 5-55% by weight of polymerizable ethylenically unsaturated anhydride or ethylencially unsaturated dicarboxylic acid.

The anhydride acrylic polymer of the coating composition of claim 1 can contain up to about 40% by weight of polymerized monomers alkyl acrylate, alkyl methacrylate or mixtures thereof having 9-12 carbon atoms in the alkyl groups.

## DETAILED DESCRIPTION OF THE INVENTION

The film forming binder of the coating composition of this invention contains components that are mixed together before application. The film forming binder content of the composition is 20-80% by weight of an organic carrier which usually is a solvent for the binder.

The composition forms an excellent clear coating over colored pigmented finishes. The coating has good adhesion to the finish, has excellent humidity resistance and is weatherable and durable. The composition is useful for finishing and refinishing the exterior of automobiles and trucks and the composition can be pigmented to form a colored Finish. Also, the composition can be used over plastic substrates used in automobiles and trucks such as filler panels, side panels, fender extensions, moldings and other trim parts.

The composition also can be pigmented to form a colored finish. These pigmented compositions are useful as exterior original equipment and refinish coatings for automibles and trucks, as maintenance coatings for tanks, bridges, buildings such as factories and oil refineries and as industrial coatings for appliances, metal cabinets, shelves and the like.

Preferably, the coating composition has a high solids content and contains about 40-80% by weight binder and 20-60% by weight of organic solvent. The binder of the composition contains about 25-90% by weight of anhydride acrylic polymer containing at least two anhydride groups, 5-50% by weight of a glycidyl containing component, and 5-50% by weight of a polymeric component containing multiple hydroxyl groups.

The anhydride acrylic polymer has a weight average molecular weight of about 2,000-50,000 determined by gel permeation chromatography using polymethyl methacrylate as a standard and preferably, has a weight average molecular weight of 3,000-25,000.

The anhydride acrylic polymer is prepared by conventional techniques in which the monomers, solvent, and conventional catalysts such as t-butyl perbenzoate are charged into a polymerization vessel and heated to about 75-200°C for about 0.5-6 hours to form the polymer.

The anhydride acrylic polymer is formed by polymerizing monomers of alkyl methacrylates, or alkyl acrylates or mixtures thereof, where the alkyl groups have 1-12 carbon atoms and ethylenically unsaturated anhydrides (or ethylenically unsaturated dicarboxylic acids which are converted to the acid anhydride during the polymerization). Optionally, the anhydride acrylic polymer can contain other components such as styrene, $\alpha$-methyl styrene, acrylonitrile, methacrylonitrile in amounts of about 0.1-50% by weight.

Typical alkyl acrylates and methacrylates that can be used to form the anhydride acrylic polymer are as follows: methyl methacrylate, ethyl methacrylate, propyl methacrylate, butyl methacrylate, pentyl methacrylate, hexyl methacrylate, octyl methacrylate decyl methacrylate, lauryl methacrylate, methyl acrylate, ethyl acrylate, propyl acrylate, butyl acrylate, octyl acrylate, nonyl acrylate, decyl acrylate, lauryl acrylate and the like. Other components that can be used to form the anhydride acrylic polymer are acrylamide, methacrylamide acrylo alkoxy silanes such as gamma methacryloyl propyl trimethoxy silane. Also the anhydride acrylic polymer can contain about 0.1-5% by weight of an ethylenically unsaturated acid such as acrylic acid, methacrylic acid, itaconic acid, maleic acid and the like.

Typically useful ethylenically unsaturated anhydrides are as follows: itaconic anhydride, maleic anhydride, isobutenyl succinic anhydride and the like. It is also possible to impart the anhydride functionality to the anhydride acrylic polymer by using the appropriate ethylenically unsaturated dicarboxylic acid which converts to the corresponding acid anhydride by simple heating. Ethylenically unsaturated dicarboxylic acids that can be used are itaconic acid, maleic acid, isobutenyl succinic acid and the like.

Preferred anhydride acrylic polymers are as follows: styrene/butyl methacrylate/butylacrylate/itaconic anhydride, methyl methacrylate/butyl acrylate/itaconic anhydride, butyl acrylate/styrene/maleic anhydride/maleic acid, methyl methacrylate/butyl acrylate/itaconic anhydride.

The glycidyl component contains at least two glycidyl groups and can be an oligomer or a polymer. Typical glycidyl components are as follows: sorbitol polyglycidyl ether, mannitol polyglycidyl ether, pentaerythritol polyglycidol ether, glycerol polyglycidyl ether, low molecular weight epoxy resins such as epoxy resins of epichlorohydrin and bisphenol A., di- and polyglycidyl esters of acids, polyglycidyl ethers of isocyanurates, such as "Denecol" EX301 from Nagase. Sorbitol polyglycidyl ether, such as Araldite XUGY-358® from Ciba-Geigy, and di- and polyglycidyl esters of acids, such as Araldite CY-184® from Ciba-Geigy, are preferred since they form high quality finishes.

Glycidyl methacrylate or acrylate containing acrylic polymers can be used such as random and block polymers of glycidyl methacrylate/butyl methacrylate. The block polymers can be prepared by anionic polymerization or by group transfer polymerization.

The hydroxy functional polymeric material has a weight average molecular weight of 3,000 to 20,000 and has multiple hydroxyl groups. The hydroxyl group containing materials can have a hydroxy value of about 50 to 300, and preferably about 75 to 175. Typical, but non-limiting, examples thereof are polymeric polyols such as acrylic polyols, polyester polyols, polyester urethane polyols, polyether polyols, acrylourethane polyols and a mixture thereof.

The acrylic polyols can be found by polymerizing monomers of alkyl methacrylates of alkyl acrylates or mixtures thereof (where the alkyl groups have 1-12 carbon atoms) and hydroxy functional alkyl (meth)acrylate [where (meth)acrylate can mean either acrylate or methacrylate.] Optionally, the arylic polyols can contain other components such as styrene, $\alpha$-methyl styrene, acrylonitrile, methacrylonitrile and the like in amounts about 0.1-50% by weight. Typical alkyl acrylates and methacrylates are discussed above in the description of the anhydride acrylic polymer.

The polyester urethane polyol is the reaction product of a hydroxyl terminated polyester and a polyisocyanate, preferably, an aliphatic diisocyanate. The urethane has a hydroxyl number of about 75-200 and preferably 100-150 and has a weight average molecular weight of about 3,000 to 25,000 and a number average molecular weight of about 2,000 to 6,000 measured using gel permeation chromatography using polymethyl methacrylate as a standard.

The polyester used to form the polyester urethane is the esterification product of an alkylene glycol, a polyhydric alcohol having at least three hydroxy groups, and an aromatic dicarboxylic acid or its anhydride.

The polyester preferably has a hydroxyl number of 100 to 200.

Typical polyisocyanates, alkylene glycols, polyhydric alcohols and aromatic dicarboxylic acids or its anhydride are discussed in U.S. Patent 4,614,683.

Typical solvents used to prepare the anhydride acrylic polymer and used as a diluent for the coating composition are as follows: toluene, xylene, butyl acetate, ethyl benzene, higher boiling aromatic hydrocarbons, amyl acetate, ethyl acetate, propyl acetate, ethylene or propylene glycol mono alkyl ether acetates.

In addition to the solvents listed above, certain alcoholic solvents are also useful. The alcoholic solvents under certain use conditions convert portions of the anhydride to a half ester also useful as reactants in this system. Examples of such alcohols are propanol, isobutanol, methanol, isopropanol, tertiary butanol, n-butanol, propylene glycol monomethyl ether, ethylene glycol monobutyl ether, and other alcoholic solvents.

About 0.1-5% by weight, based on the weight of the binder of the coating composition, of a catalyst is added to enhance curing of the composition. Typical catalysts are as follows: triethylene diamine, quinuclidine, dialkyl alkanol amines such as dimethyl ethanolamine, diethyl ethanol amine, dibutyl ethanol amine, diethyl hexanol amine and the like, lithium tertiary butoxide, tri(dimethylaminomethyl)phenol, bis(dimethylamino)propan-2-ol, N,N,N$^1$,N$^1$-tetramethylethylenediamine, N,methyldiethanolamine, N,N-dimethyl-1,3-propanediamine and 1-dimenthylamino-2-propanol or quaternary ammonium salts such as tert-butyl ammonium bromide, benzyl trimethyl ammonium formate and the like. In addition, the catalyst can be incorporated in the polymeric chain by using amino functional alkyl acrylates such as 2-diethyl amino ethyl methacrylate, vinyl pyridine, tert-butyl amino ethyl methacrylate and the like.

The catalyst need not be added to the coating composition. After an article is coated, the article is passed into a chamber-containing catalyst vapors. Dimethylethanol amine is a catalyst that can be vaporized and used to cure the composition. Also, to achieve curing, the catalyst can be sprayed with the coating composition using a dual spray gun.

Generally, the composition is applied by conventional techniques such as spraying and electrotastic spraying. The resulting coating can be dried and cured at ambient temperatures or can be cured at elevated temperatures of 60 to 200°C. At ambient temperatures, the coating dries to a tack free condition in about 180 minutes and in about 24 hours the coating is substantially cured. In about 5-7 days, the coating is completely cured. Coatings are applied to form a finish about 13-130μm (0.5-5 mils) thick, and preferably 25-50μm (1-2 mils) thick. The finish has excellent gloss, good adhesion to substrate, excellent weatherability, and high solids.

To improve weatherability of the clear finish of the coating composition, about 0.1-5%, by weight, based on the weight of the binder, of an ultraviolet light stabilizer or a combination of ultraviolet light stabilizers can be added. These stabilizers include ultraviolet light absorbers, screeners, quenchers and specific hindered amine light stabilizers. Also, about 0.1-5% by weight, based on the weight of the binder, of an antioxidant can be added.

Typical ultraviolet light stabilizers that are useful are as follows:

Benzophenones such as hydroxydodecyclobenzophenone, 2,4-dihydroxybenzophenone, hydroxy-benzophenones containing sulfonic acid groups, 2,4-dihydroxy-3′,5′-di-t-butylbenzophenone, 2,2′,4′-trihydroxybenzophenone esters of dicarboxylic acids, 2-hydroxy-4-acryloxyethoxybenzophenone, aliphatic mono-esters of 2,2′,4-trihydroxy-4′-alkoxybenzophenone, 2-hydroxy-4-methoxy-2′-carboxybenzophenone;

Triazoles such as 2-phenyl-4-(2′-4′-dihydroxybenzoyl)triazoles, substituted benzotriazoles such as hydroxyphenyltriazoles such as 2-(2′hydroxy-5′-methylphenyl) benzotriazole, 2-(2′hydroxyphenyl)benzo-triazole, 2-(2′-hydroxy-5′-octylphenyl)naphthotriazole;

Triazines such as 3,5-dialkyl-4-hydroxyphenyl derivatives of triazine, sulfur-containing derivatives of dialkyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2′-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri-pentaerythritol, phenyl- and naphthlene- substituted oxalic acid diamides, methyl-β-(3,5-di-t-butyl-4-hydroxyphenyl)propionate, α,α′-bis(2-hydroxy-phenyl)diisopropylbenzene, 3,5′-dibromo-2′-hydroxy-acetophenone, ester derivatives of 4,4-bis(4′-hydroxy-phenyl)pentaonic acid wherein there is at least one unsubstituted position ortho to the aromatic hydroxyl groups, organophosphorus sulfides such as bis(diphenyl-phosphinothioyl)monosulfide and bis(diphenyl-phosphinothioyl)disulfide, 4-benzoyl-6-(dialkylhydroxybenzyl)resorcinol, bis(3-hydroxy-4-benzoylphenoxy)diphenylsilane, bis(3-hydroxy-4-benzoylphenoxy)dialkylsilane, 1,8-naphthalimides,α-cyano-β,β-diphenylacrylic acid derivatives, bis(2-benzoxazolyl)alkanes, bis(2-naphthoxazolyl)alkanes, methylene malonitriles containing aryl and heteroacyclic substitutes, alkylenebis(dithio)carbamate, 4-benzoyl-3-hydroxyphenoxyethyl acrylate, 4-benzoyl-3-hydroxyphenoxyethyl methacrylate, aryl or alkyl-substituted acrylonitriles, 3-methyl-5-isopropylphenyl-6-hydroxycourmarone, 8-acetyl-3-dodecyl-7,7,9,9-tetramethyl-1,3,8-triazaspiro(4,5)decanol-2,4-dione.

Particularly useful ultraviolet light stabilizers that can be used are hindered amines of piperidyl derivatives such as those disclosed in Murayama et al., U.S. Patent 4,061,616, issued December 6, 1977, column, 2, line 65, through column 4, line 2, and nickel compounds much as [1-phenyl-3-methyl-4-decanoylpyrazolate(5)]-Ni, bis[phenyldithiocarbamato)-Ni(II), and others listed in the above patent, column 8, line 14 through line 55.

The following blend of ultraviolet light stabilizers can be used: 2-[2′-hydroxy-3′,5′-1(1-1-dimethyl-propyl)phenyl]-benzotrizole and bis-[4-(1,2,2,6,6-pentamethylpiperidyl)] 2-butyl-2-[(3,5-t-butyl-4-hydroxyphenyl)methyl] propanedioate. The stabilizers can be sued in any ratio however, a 1:1 ratio of benzotriazole to propanedioate is preferred.

Another useful blend of ultraviolet light stabilizers is 2-(benzotriazole-2-VL)-4,6-bis(methylethyl-1-phenyl ethyl)phenol, and 2(3 hydroxy-3,5′-ditert amyl phenyl) benzotriazole.

Generally, when the coating composition of this invention is used as a clear coating, it is applied by conventional spraying techniques, to a color or base coat of an automobile or truck, preferably, electrostatic spraying is used. The coatings are baked at about 60° to 140°C for about 10 to 10 minutes. In refinishing automobiles and trucks, the clear coating is applied to a color coat and then can be dried at ambient temperatures or baked to form a clear finish. The resulting clear coat or finish is about 25-130μm (1-5 mils) thick, preferably 25-50μm (1-2 mils) thick, and has excellent gloss, good adhesion to the color coat and excellent weatherability.

The composition can be pigmented to form a colored finish or primer. About 0.1-200% by weight, based on the weight of the binder, of conventional pigments can be added using conventional techniques in which a mill base containing pigment, dispersant and solvent is first formed. The mill base is then mixed with the composition to form a colored composition. This composition can be applied and cured as shown above.

The following examples illustrate the invention. All parts and percentages are on a weight basis unless indicated otherwise. Molecular weights are determined by gel permeation chromatography using polymethyl methacrylate as the standard.

<u>Example 1</u>

<u>Anhydride Acrylic Polymer</u>

The following constituents were charged into a reactor with a thermometer, stirrer, dropping funnel, nitrogen induction tube and condenser:

| <u>Portion 1</u> | <u>Parts by Weight</u> |
|---|---|
| Xylene | 182.4 |
| Butyl Acetate | 20.2 |
| | |
| <u>Portion 2</u> | |
| Methylmethacrylate Monomer | 96.0 |
| Butylacrylate Monomer | 293.4 |
| Xylene | 10.0 |
| | |
| <u>Portion 3</u> | |
| Itaconic Acid | 167.2 |
| Xylene | 59.8 |
| | |
| <u>Portion 4</u> | |
| T-Butylperacetate | 26.7 |
| Butyl Acetate | 10.6 |
| Xylene | <u>6.7</u> |
| Total | 973.0 |

Portion 1 was charged to the reactor, covered with a nitrogen blanket and heated to its reflux temperature (approximately 135°C). Portion 2 is added dropwise over a 180 minute period. Portion 3 is added simultaneously with portions 2 and 4 over a 180 minute period as five minute increment shots of solid itaconic acid followed with washings of xylene. Portion 4 was premixed and added dropwise simultaneously with portions 2 and 3 over a 200 minute period. The resulting composition is then held at reflux until 10Kg $H_2O$ per 380 l (22 pounds of water per 100 gallon) batch size are removed.

The resulting polymer composition had a weight solids content of 64-66% and the polymer had a Gardner-Holdt viscosity of X-Z2. The polymer had a weight average molecular weight of 3500.

Hydroxy Functional Polymer "A"

The following constituents were charged into a reactor equipped with a thermometer, stirrer, dropping funnel, nitrogen induction tube and condenser.

| Portion 1 | Parts by Weight |
|---|---|
| Methy Amyl Ketone | 170.9 |

| Portion 2 | |
|---|---|
| Methyl Amyl Ketone | 61.9 |
| 75% Tert-Butylperacetate in mineral spirits | 27.7 |

| Portion 3 | |
|---|---|
| Styrene | 143.9 |
| Ethyl methacrylate | 143.9 |
| Lauryl methacrylate | 115.1 |
| Hydroxyethylacrylate | 172.6 |
| Total | 863.0 |

Portion 1 was charged into the reaction covered with a nitrogen blanket and heated to its reflux temperature (approximately 149-154°C). Portion 2 was premixed and added dropwise to the reactor over a 165 minute period. Portion 3 was premixed and added dropwise to the reactor over a 150 minute period beginning at the same time that Portion 2 is added. After the addition of Portions 2 and 3, it was held under reflux (approximately 145-155°C) for a 120-minute period and then cooled to 50-60°C and filter pressed.

The resulting polymer had a weight solids content of 69-71% and a Gardner-Holdt viscosity of Z-1 to Z-3. The polymer had a weight average molecular weight of 12,000.

Coating compositions were prepared by thoroughly blending the following constituents:

| Part 1 | Parts by Weight |
|---|---|
| Hydroxy Functional Polymer "A" (prepared above) | 111.7 |
| DABCO® (triethylenediamine from from Air Products Corp.) | 3.2 |
| Tinuvin 328® (UV absorber from Ciba-Geigy) | 4.3 |
| Tinuvin 144® (hindered amine light stabilizer from Ciba-Geigy) | 4.3 |
| Butyl Alcohol | 13.8 |
| Xylene | 77.2 |
| Propyleneglycolmonomethylether-acetate (PM acetate) | 16.4 |
| Hexylacetate | 16.4 |
| Butylacetate | 41.8 |

7

### Part 2

| | |
|---|---|
| Araldite CY184® (Epoxy Resin from Ciba-Geigy) | 21.3 |
| Denecol EX622® (Epoxy Resin from Ciba-Geigy) | 21.3 |
| Ethylacetate | 4.7 |

### Part 3

| | |
|---|---|
| Anhydride Acrylic Polymer (prepared above) | 145.0 |
| Total | 481.4 |

Just prior to application, the above parts were premixed. The resulting coating composition was reduced further with 90 parts of butyl acetate to a Zahn Cup No. 1 viscosity of 31 seconds. It was then sprayed onto a primed metal panel coated with a pigmented acrylic lacquer. The composition cured at ambient temperature and provided a clear coat with excellent hardness, resistance to gas and water, low yellowing, good acid spot resistance, solvent resistance and good Florida durability.

Example 2

Hydroxy Functional Polymer "B"

A hydroxy functional polymer was prepared by charging the following constituents into a reactor equipped with a thermometer, stirrer, dropping funnel, nitrogen induction tube and condenser:

| Portion 1 | Parts by Weight |
|---|---|
| Xylene | 1980.0 |

| Portion 2 | |
|---|---|
| Methylmethacrylate | 710.0 |
| Hydroxyethylacrylate | 1420.0 |
| Styrene | 710.0 |
| Butyl acrylate | 1890.0 |
| Xylene | 1495.0 |

| Portion 3 | |
|---|---|
| Xylene | 302.0 |
| t-Butylperacetate | 220.0 |
| Total | 8727.0 |

Portion 1 was charged into the reactor, covered with a nitrogen blanked and heated to its reflux temperature. Portions 2 and 3 were charged into the reactor starting at the same time. Portion 2 was added dropwise continuously over a period of 225 minutes while maintaining reflux. Portion 3 was added dropwise continuously over a period of 240 minutes. After completing the charge of portion 3 the reactor was held at reflux for an additional 15 minutes. 1500 parts of xylene were distilled out and the composition was allowed to cool.

The resulting polymer had a weight solids content of 67-70% and a Gardner-Holdt viscosity of Y to Z-1. The polymer had a weight average molecular weight of 8,000.

A coating composition was prepared by thoroughly mixing the following components:

|  | Parts by Weight |
|---|---|
| Anhydride Acrylic polymer (as prepared in Example 1) | 19.6 |
| Hydroxy functional polymer "B" (Prepared above) | 3.5 |
| Butyl acetate | 13.3 |
| Araldite CY-184® | 4.2 |
| 15.5% dimethylethanol amine in xylene | 3.9 |
| Total | 44.5 |

The resulting coating composition was reduced to a spray viscosity of 35 seconds measured with a No. 2 Zahn cup accomplished by adding butyl acetate.

The coating composition was sprayed onto a primed metal panel coated with a pigmented waterborne base coat. The composition was cured at 82-93°C (180-200°F) and provided a clear coat with excellent color, durability, humidity resistance and film properties. The coating composition was also sprayed over a solvent borne melamine cured base coat and cured at 116-141°C (240-285°F). The resulting coating exhibited excellent color, durability, humidity resistance and other film properties.

Example 3

A polyester resin with hydroxy functionality was prepared by reacting the following constituents in a polymerization vessel with a water separator and using reaction temperatures and times as are conventionally used to mate polyester resins:

|  | Parts by Weight |
|---|---|
| 1,3-Butylene glycol | 120.41 |
| Xylene | 11.10 |
| 1,6 Hexane diol | 145.79 |
| Trimethylol propane | 70.41 |
| Isophthalic acid | 140.31 |
| Water | 44.44 |
| Xylene | 21.79 |
| Ethylene glycol monoethyl ether acetate | 249.10 |
| Total | 1073.36 |
| Water loss* | 133.36 |
| Yield | 940.00 |

*Water loss includes water that was added to fill the water separator

The resulting polyester resin solution had a weight solids content of about 70% and a Gardner-Holdt viscosity measured at 25°C of about W-Z. The polyester resin had a molar percentage of constituents of 9.4% trimethylol propane, 22.1% 1,6 hexanediol, 24.4% 1,3-butylene diol and 44.3% isophthalic acid. The polyester resin had an acid no. of 6.5-8.5, a hydroxyl number of 130-155, a Mn (number average molecular weight) of 1400 and a Mw (weight average molecular weight) of 4,000.

A polyester urethane resin solution was prepared by reacting the following constituents using conventional reaction times and temperatures:

|  | Parts by Weight |
| --- | --- |
| Polyester resin solutions (Prepared above) | 291.62 |
| Polycaprolactone triol | 264.59 |
| Ethylene glycol monoethyl ether acetate | 52.46 |
| Slow aromatic hydrocarbon solvent | 199.85 |
| 1,6 Hexamethylene diisocyanate | 47.48 |
| Total | 856.00 |

The resulting polyester urethane resin solution had a weight solids content of 60% and a Gardner-Holdt viscosity measured at 25°C of about X-Y. The polyester urethane had a molar percentage of constituents of 24% polyester, 38.7% polycaprolactone triol and 37.3% 1,6 hexamethylene diisocyanate, acid no. of 2.4-4.0, hydroxyl no. 85, Mn 3,700 and Mw 19,600.

A coating composition was prepared by thoroughly blending together the following constituents:

|  | Parts by Weight |
| --- | --- |
| Anhydride acrylic polymer (as prepared in Example 1) | 23.0 |
| Polyesterurethane resin with hydroxy functionality (as prepared above) | 6.7 |
| Butyl acetate | 5.0 |
| PM acetate | 3.0 |
| Araldite CY-184® | 9.6 |
| 15% dimethylethanolamine in propanol | 5.3 |
| Total | 52.6 |

The resulting coating composition was reduced to a spray viscosity of 35 seconds measured with a No. 2 Zahn Cup accomplished by adding butyl acetate.

The coating composition was sprayed onto a primed metal panel coated with a waterborne basecoat and cured at 82-93°C (180-200°F) and provided a clear coat with excellent color, durability, humidity resistance and film properties. The coating composition was also sprayed over solvent borne melamine cured base coat and cured at 116-146°C (240-295°F). The resulting coating exhibited excellent color, durability, humidity resistance and other film properties.

Example 4

Hydroxy Functional Polymer "C"

A hydroxy functional polymer was prepared when the following constituents were charged into a reactor with a thermometer, stirrer, dropping funnel, nitrogen induction tube and condensor:

|  |  | Parts by Weight |
|---|---|---|
| **Portion 1** | | |
| Tris amino oil of linseed oil | | 55.58 |
| fatty acid | | |
| Methyl methacrylate | | 20.65 |
| Butyl methacrylate | | 16.96 |
| Hydroxy ethyl acrylate | | 6.36 |
| 2-diethylamino ethyl methacrylate | | 1.05 |
| Xylene | | 110.87 |
| | | |
| **Portion 2** | | |
| Butyl acetate | | 25.10 |
| | | |
| **Portion 3** | | |
| Xylene | | 2.25 |
| 2-mercapto ethanol | | 2.12 |
| Butyl acetate | | 17.00 |
| | | |
| **Portion 4** | | |
| Tris amino oil of linseed oil | | 23.85 |
| fatty acid | | |
| Butyl methacrylate | | 152.58 |
| Hydroxy ethyl acrylate | | 57.21 |
| 2-Diethylamino ethyl methacrylate | | 9.54 |
| Methyl methacrylate | | 185.96 |
| | | |
| **Portion 5** | | |
| Xylene | | 92.36 |
| Cyclohexane carbonitrile, 1,1'-azobis | | 12.60 |
| | | |
| **Portion 6** | | |
| Butyl acetate | | 31.83 |
| Xylene | | 15.11 |
| | Total | 839.00 |

Portion 1 was charged to the reactor, covered with a nitrogen blanket and heated to its reflux temperature. Portion 2 is then added to the reactor. The xylene in Portion 5 was heated to 30°C in a premix container before adding the cyclohexane carbonitrile, 1,1'-azobis. After reflux, 10% of Portion 5 was added to the reactor and held two minutes. Portions 3 and 4 were premixed and added simultaneously to the reactor over a 120 minute period along with 67% of Portion 5. The remaining 23% of Portion 5 was added to the reactor over a 90 minute period. The entire mixture was held 30 minutes while maintaining reflux. The resulting polymer was reduced to solids by adding Portion 6.

The resulting polymer had a weight solids content of 59.5-60.5 and Gardner-Holdt viscosity of Y-Z. The polymer had a weight average molecular weight of 15,000-17,000.

A white dispersion was prepared by mixing the following constituents into a blend tank:

| Portion 1 | Parts by Weight |
|---|---|
| Hydroxy functional polymer "C" (as prepared above) | 10.50 |
| Solvent mixture of 5.00 weight % primary amyl acetate, 23.75 weight % butyl acetate and 71.25 weight % xylene | 10.22 |

| Portion 2 | |
|---|---|
| TiO$_2$ White pigment | 56.39 |

| Portion 3 | |
|---|---|
| Hydroxy Functional Polymer (prepared above) | 18.38 |
| Solvent mixture (described above) | 2.51 |
| Anti-settling clear dispersion consisting of 20 parts anti-Terra-U® from BYK Mallinckrodt, 3 parts ethylene glycol, 67 parts xylene and 10 parts Bentone 34® from N.L. Industries | 2.00 |

Portion 1 was added to the blend tank while mixing at low speed and then mixed for 10 minutes at low speed. Portion 2 was added to the blend tank while mixing at low speed and then mixed at high speed for 20 minutes. Portion 3 was added to the blend tank while mixing at low speeds and then mixed at a high speed for 20 minutes after the last addition. The resulting blend was put through a sand mill for fineness.

A coating composition was prepared by throughly blending together the following components:

EP 0 358 306 B1

| Portion 1 | Parts by Weight |
|---|---|
| White Dispersion (prepared above) | 153.4 |
| Denecol EX-622® (Nagase) Epoxy Ether | 28.3 |
| Araldite CY-184® (Ciba-Geigy) Epoxy Ester | 15.1 |
| Silicone SF-69® (General Electric) Silicone Oil | 0.2 |
| Modaflow® (Monsanto) Acrylic Resin Modifier | 0.4 |
| BYK-300® (BYK-Mallinckrodt) Silicone Resin | 0.4 |

| Portion 2 | |
|---|---|
| Anhydride Acrylic Polymer (as prepared in Example 1) | 135.0 |

| Portion 3 | |
|---|---|
| DABCO® (Air Products) Triethylene Diamine | 1.7 |
| Dimethylethanol Amine | 1.7 |
| Tinuvin 292® (hindered amine light stabilizer from Ciba-Geigy) | 1.7 |
| Tinuvin 328® (UV absorber from Ciba-Geigy) | 1.7 |
| Xylene | 80.4 |
| Total | 420.0 |

The resulting coating composition had a weight solids content of 60% and Stormer viscosity of 59KU. The coating composition was sprayed onto a primed metal panel and exhibited excellent gloss, hardness, and adhesion after 24 hours ambient cure. Final cure resulted after 10 days, at which time the coating composition was hard and resisted over 100 double methyl ethyl ketone solvent rubs. This coating also displays outstanding gloss retention and salt spray/humidity resistance.

## Claims

1. A coating composition comprising 20-80% by weight of reactive binder components and 80-20% by weight of an organic liquid carrier; the binder comprising:

a) 25-90% by weight, based on the weight of the binder, of an anhydride acrylic polymer having at least two reactive anhydride groups and consists of polymerized monomers of an ethylenically unsaturated anhydride or an ethylenically unsaturated dicarboxylic acid and polymerized monomers selected from the group consisting of alkyl methacrylate, alkyl acrylate and any mixture thereof, wherein the alkyl groups have 1-8 carbon atoms and the polymer has a weight average molecular weight of about 2,000 - 50,000;

b) 5-50% by weight, based on the weight of the binder, of a glycidyl component having at least two reac-

13

tive glycidyl groups;

c) 5 to 50% of a polymeric component containing multiple hydroxy groups selected from the group consisting of acrylic polyols, polyester polyols, polyesterurethane polyols, polyether polyols, acrylourethane polyols and any mixtures thereof and having a weight average molecular weight of 3,000 to 20,000; and

the composition contains about 0.1-5% by weight, based on the weight of the binder, of a catalyst.

2. The coating composition of claim 1 in which the glycidyl component is selected from the group consisting of polyglycidyl ether of low molecular weight polyol, low molecular weight epoxy resins, polyglycidyl ester of polyacids, polyglycidyl ethers of isocyanurates, glycidyl methacrylate or glycidyl acrylate containing acrylic polymer or compatible mixture of any of the above.

3. The coating composition of claim 1 in which the anyhydride acrylic polymer contains about 0.1-50% by weight of monomers selected from the group consisting of styrene, acrylonitrile, methacrylonitrile and any mixtures thereof.

4. The coating composition of claim 1 in which the anhydride acrylic polymer has a glass transition temperature of 0 to 75°C and a weight average molecular weight of about 3,000 - 25,000.

5. The coating composition of claim 4 in which the anhydride acrylic polymer consists essentially of 20-40% by weight, based on the weight of the acrylic polymer of methyl methacrylate, styrene or mixture of methyl methacrylate and styrene, 35-55% by weight of an alkyl methacrylate or an alkyl acrylate having 2-4 carbon atoms in the alkyl group and 5-55% by weight of polymerizable ethylenically unsaturated anhydride or ethylencially unsaturated dicarboxylic acid.

6. The coating composition of claim 1 in which the polymeric component containing multiple hydroxy groups is a polymer comprising polymerized monomers of a hydroxy alkyl methacrylate or hydroxy alkyl acrylate and polymerized monomers selected from the group consisting of alkyl methacrylate, alkyl acrylate and any mixtures thereof, wherein the alkyl groups have 1-12 carbon atoms and the polymer has a weight average molecular weight of about 3,000 to 20,000.

7. The coating composition of claim 6 in which the polymeric component containing multiple hydroxy groups contains about 0.1 to 50% by weight of monomers selected from the group consisting of styrene, acrylonitrile, methacrylonitrile and any mixtures thereof.

8. The coating composition of claim 6 in which the catalytic activity can be incorporated in the polymeric chain by using amino functional alkyl acrylates or methacrylates.

9. The coating composition of claim 1 in which the polyesterurethane is the reaction product of a polyisocyanate and a polyester which is the esterification product of an alkylene glycol, a polyhydric alcohol having at least three hydroxyl groups and an aromatic discarboxylic acid or its anhydride.

10. The coating composition of claim 9 in which the polyesterurethane polyol has a hydroxyl number of about 75 to 200 and a weight average molecular weight of about 3,000 to 20,000.

11. The coating composition of claim 5 in which the glycidyl component comprises a polyglycidyl ether of a polyol or a di- or polyglycidylester of an acid.

12. The coating composition of claim 11 in which the anhydride acrylic polymer consists of polymerized monomer of methyl methacrylate, butyl acrylate and itaconic acid.

13. The coating composition of claim 11 in which the anhydride acrylic polymer consists of polymerized monomers of butyl acrylate, styrene, maleic anhydride and maleic acid.

14. The coating composition of claim 5 in which the anhydride acrylic polymer consists essentially of polymerized monomers of methyl methacrylate, styrene, butyl acrylate and itaconic anhydride; the glycidyl component consists essentially of sorbitol polyglycidyl ether or the di-or polyglycidylester of an acid or a mixture thereof and the catalyst is triethylene diamine or dimethyl ethanol amine or a mixture thereof.

15. The coating composition of claim 5 in which the anhydride acrylic polymer consists essentially of polymerized monomers of butyl acrylate, styrene, maleic anhydride and maleic acid; the glycidyl component consists essentially of sorbitol polyglycidyl ether or the di- or polyglycidylester of an acid or a mixture thereof and the catalyst is triethylene diamine or dimethyl ethanol amine or a mixture thereof.

16. The coating composition of claim 1 containing about 0.1-200% by weight based on the weight of the binder of pigment.

17. The coating composition of claim 1 in which the acrylic polymer contains up to about 40% by weight of polymerized monomers alkyl acrylate, alkyl methacrylate or mixtures thereof having 9-12 carbon atoms in the alkyl groups.

18. A substrate coated with a layer of a waterborne basecoat and a clearcoat of the composition of claim 1 wherein the basecoat and clearcoat are cured at ambient or relevated temperatures.

19. A substrate coated with a layer of solvent borne melamine crosslinked basecoat and a clearcoat of the composition of claim 1, wherein the basecoat and clearcoat are cured at elevated temperatures.

20. A substrate coated with a layer of a solvent borne lacquer basecoat and a clear coat of the composition of claim 1, wherein the basecoat and clearcoat are cured at ambient temperatures.

## Patentansprüche

1. Überzugszusammensetzung aus 20 bis 80 Gew.-% reaktiven Bindemittelkomponenten und 80 bis 20 Gew.-% eines organischen flüssigen Trägers, wobei das Bindemittel

a) 25 bis 90 Gew.-%, bezogen auf das Gewicht des Bindemittels, eines Anhydrid-Acrylpolymers mit wenigstens 2 reaktiven Anhydridgruppen, das aus polymerisierten Monomeren eines ethylenisch ungesättigten Anhydrids oder einer ethylenisch ungesättigten Dicarbonsäure und aus der aus Alkylmethacrylat, Alkylacrylat und beliebigen Mischungen davon bestehenden Gruppe ausgewählten polymerisierten Monomeren besteht, worin die Alkylgruppen 1 bis 8 Kohlenstoffatome aufweisen und das Polymer ein Gewichtsmittel-Molekulargewicht von etwa 2.000 bis 50.000 hat;

b) 5 bis 50 Gew.-%, bezogen auf das Gewicht des Bindemittels, einer Glycidylkomponente mit wenigstens 2 reaktiven Glycidylgruppen;

c) 5 bis 50 % einer aus der aus Acrylpolyolen, Polyesterpolyolen, Polyesterurethanpolyolen, Polyetherpolyolen, Acrylurethanpolyolen und beliebigen Mischungen davon bestehenden Gruppe ausgewählten polymeren Komponente mit multiplen Hydroxygruppen, die ein Gewichtsmittel-Molekulargewicht von 3.000 bis 20.000 hat, enthält und die Zusammensetzung etwa 0,1 bis 5 Gew.-%, bezogen auf das Gewicht des Bindemittels, eines Katalysators enthält.

2. Überzugszusammensetzung nach Anspruch 1, worin die Glycidylkomponente aus der aus Polyglycidylethern aus Polyol niedrigen Molekulargewichts, Epoxyharzen niedrigen Molekulargewichts, Polyglycidylestern von Polysäuren, Polyglycidylethern von Isocyanuraten, Glycidylmethacrylat oder Glycidylacrylat mit Acrylpolymer oder verträglichen Mischungen beliebiger der vorstehenden bestehenden Gruppe ausgewählt ist.

3. Überzugszusammensetzung nach Anspruch 1, worin das Anhydrid-Acrylpolymer etwa 0,1 bis 50 Gew.-% aus der aus Styrol, Acrylnitril, Methacrylnitril und beliebigen Mischungen davon bestehenden Gruppe ausgewählte Monomere enthält.

4. Überzugszusammensetzung nach Anspruch 1, worin das Anhydrid-Acrylpolymer eine Glasübergangstemperatur von 0 bis 75°C und ein Gewichtsmittel-Molekulargewicht von etwa 3.000 bis 25.000 hat.

5. Überzugszusammensetzung nach Anspruch 4, worin das Anhydrid-Acrylpolymer im wesentlichen aus 20 bis 40 Gew.-%, bezogen auf das Gewicht des Acrylpolymers, Methylmethacrylat, Styrol oder Mischungen aus Methylmethacrylat oder Styrol, 35 bis 55 Gew.-% eines Alkylmethacrylats oder eines Alkylacrylats mit 2 bis 4 Kohlenstoffatomen in der Alkylgruppe und 5 bis 55 Gew.-% polymerisierbarem ethylenisch ungesättigtem Anhydrid oder ethylenisch ungesättigter Dicarbonsäure besteht.

6. Überzugszusammensetzung nach Anspruch 1, worin die multiple Hydroxygruppen enthaltende polymere Komponente ein polymerisierte Monomere eines Hydroxyalkylmethacrylats oder Hydroxyalkylacrylats und aus der aus Alkylmethacrylat, Alkylacrylat und beliebigen Mischungen davon bestehenden Gruppe ausgewählte polymerisierte Monomere umfaßt, worin die Alkylgruppen 1 bis 12 Kohlenstoffatome aufweisen und das Polymer ein Gewichtsmittel-Molekulargewicht von etwa 3.000 bis 20.000 hat.

7. Überzugszusammensetzung nach Anspruch 6, worin die multiple Hydroxygruppen enthaltende polymere Komponente etwa 0,1 bis 50 Gew.-% aus der aus Styrol, Acrylnitril, Methacrylnitril und beliebigen Mischungen davon bestehenden Gruppe ausgewählte Monomere enthält.

8. Überzugszusammensetzung nach Anspruch 6, worin die katalytische Aktivität in die Polymerkette durch Verwendung von aminofunktionellen Alkylacrylaten oder -methacrylaten eingebracht sein kann.

9. Überzugszusammensetzung nach Anspruch 1, worin das Polyesterurethan das Reaktionsprodukt eines Polyisocyanats und eines Polyesters ist, der das Veresterungsprodukt eines Alkylenglykols, eines mehrwertigen Alkohols mit wenigstens drei Hydroxylgruppen und einer aromatischen Dicarbonsäure oder ihres Anhydrids ist.

10. Überzugszusammensetzung nach Anspruch 9, worin das Polyesterurethanpolyol eine Hydroxylzahl von etwa 75 bis 200 hat und ein Gewichtsmittel-Molekulargewicht von etwa 3.000 bis 20.000.

11. Überzugszusammensetzung nach Anspruch 5, worin die Glycidylkomponente einen Polyglycidylether eines Polyols oder eines Di- oder Polyglycidylesters einer Säure umfaßt.

12. Überzugszusammensetzung nach Anspruch 11, worin das Anhydrid-Acrylpolymer aus polymerisiertem Monomer von Methylmethacrylat, Butylacrylat und Itaconsäure besteht.

13. Überzugszusammensetzung nach Anspruch 11, worin das Anhydrid-Acrylpolymer aus polymerisierten Monomeren von Butylacrylat, Styrol, Maleinsäureanhydrid und Maleinsäure besteht.

14. Überzugszusammensetzung nach Anspruch 5, worin das Anhydrid-Acrylpolymer im wesentlichen aus polymerisierten Monomeren von Methylmethacrylat, Styrol, Butylacrylat und Itaconsäure besteht; die Glycidylkomponente im wesentlichen aus Sorbitpolyglycidylether oder dem Di- oder Polyglycidylester einer Säure oder einer Mischung davon und der Katalysator Triethylendiamin oder Dimethylethanolamin oder eine Mischung davon ist.

15. Überzugszusammensetzung nach Anspruch 5, worin das Anhydrid-Acrylpolymer im wesentlichen aus polymerisierten Monomeren von Butylacrylat, Styrol, Maleinsäureanhydrid und Maleinsäure besteht; die Glycidylkomponente im wesentlichen aus Sorbitpolyglycidylether oder den Di- oder Polyglycidylester einer Säure oder einer Mischung davon und der Katalysator Triethylendiamin oder Dimethylethanolamin oder eine Mischung davon ist.

16. Überzugszusammensetzung nach Anspruch 1, welche etwa 0,1 bis 200 Gew.-%, bezogen auf das Gewicht des Bindemittels, Pigment enthält.

17. Überzugszusammensetzung nach Anspruch 1, worin das Acrylpolymer bis zu etwa 40 Gew.-% polymerisierte Monomere von Alkylacrylat, Alkylmethacrylat oder Mischungen davon mit 9 bis 12 Kohlenstoffatomen in der Alkylgruppe enthält.

18. Mit einer Schicht einer Grundierung auf Wasserbasis und einem Klarlack der Zusammensetzung nach Anspruch 1 beschichtetes Substrat, worin die Grundierung und der Klarlack bei Raum- oder erhöhter Temperatur gehärtet sind.

19. Mit einer Schicht aus einer melaminvernetzten Grundierung auf Lösungsmittelbasis und einem Klarlack der Zusammensetzung nach Anspruch 1 beschichtetes Substrat, worin die Grundierung und der Klarlack bei erhöhter Temperatur gehärtet sind.

20. Mit einer Schicht aus einer Grundlackierung auf Lösungsmittelbasis und einem Klarlack aus der Zusammensetzung nach Anspruch 1 beschichtetes Substrat, worin die Grundierung und der Klarlack bei Raumtemperatur gehärtet sind.

## Revendications

1. Une composition de revêtement comprenant 20 à 80 % en poids de composants réactifs de liant et 80 à 20 % en poids d'un support organique liquide ; le liant comprenant :

a) 25 à 90 % en poids, par rapport au poids du liant, d'un polymère acrylique d'anhydride ayant au moins deux groupes anhydride réactifs et constitué de monomères polymérisés d'un anhydride éthyléniquement insaturé ou d'un acide dicarboxylique éthyléniquement insaturé et de monomères polymérisés choisis dans le groupe consistant en méthacrylate d'alkyle, acrylate d'alkyle et tout mélange d'entre eux, les groupes alkyles ayant 1 à 8 atomes de carbone et le polymère ayant un poids moléculaire moyen en poids d'environ 2000 à 50 000 ;

b) 5 à 50 % en poids, par rapport au poids du liant, d'un composant glycidylique ayant au moins deux groupes glycidyle réactifs ;

c) 5 à 50 % d'un composant polymère contenant plusieurs groupes hydroxyle, choisi dans le groupe consistant en polyols acryliques, polyester-polyols, polyesteruréthanne-polyols, polyéther-polyols, acrylouréthanne-polyols et tous mélanges d'entre eux, et ayant un poids moléculaire moyen en poids de 3000 à 20 000 ; et

la composition contenant environ 0,1 à 5 % en poids, par rapport au poids du liant, d'un catalyseur.

2. La composition de revêtement de la revendication 1, dans laquelle le composant glycidylique est choisi dans le groupe consistant en éthers polyglycidyliques de polyols de bas poids moléculaire, résines époxy de bas poids moléculaire, esters polyglycidyliques de polyacides, éthers polyglycidyliques d'isocyanurates, polymères acryliques contenant du méthacrylate de glycidyle ou de l'acrylate de glycidyle, ou un mélange compatible de n'importe lesquels d'entre eux.

3. La composition de revêtement de la revendication 1, dans laquelle le polymère acrylique d'anhydride contient environ 0,1 à 50 % en poids de monomères choisis dans le groupe formé par le styrène, l'acrylonitrile, le méthacrylonitrile et tous mélanges d'entre eux.

4. La composition de revêtement de la revendication 1, dans laquelle le polymère acrylique d'anhydride a une température de transition vitreuse de 0 à 75°C et un poids moléculaire moyen en poids d'environ 3000 à 25 000.

5. La composition de revêtement de la revendication 4, dans laquelle le polymère acrylique d'anhydride est constitué essentiellement de 20 à 40 % en poids, par rapport au poids du polymère acrylique, de méthacrylate de méthyle, styrène, ou mélange de méthacrylate de méthyle et de styrène, 35 à 55 % en poids d'un méthacrylate d'alkyle ou d'un acrylate d'alkyle dont le groupe alkyle compte 2 à 4 atomes de carbone et 5 à 55 % en poids d'un anhydride éthyléniquement insaturé ou d'un acide dicarboxylique éthyléniquement insaturé polymérisable.

6. La composition de revêtement de la revendication 1, dans laquelle le composant polymère contenant plusieurs groupes hydroxyle est un polymère comprenant des monomères polymérisés d'un méthacrylate d'hydroxyalkyle ou acrylate d'hydroxyalkyle et des monomères polymérisés choisis dans le groupe consistant en méthacrylate d'alkyle, acrylate d'alkyle et tous mélanges d'entre eux, les groupes alkyle ayant 1 à 12 atomes de carbone et le polymère ayant un poids moléculaire moyen en poids d'environ 3000 à 20 000.

7. La composition de revêtement de la revendication 6, dans laquelle le composant polymère contenant plusieurs groupes hydroxyle contient environ 0,1 à 50 % en poids de monomères choisis dans le groupe formé par le styrène, l'acrylonitrile, le méthacrylonitrile et tous mélanges d'entre eux.

8. La composition de revêtement de la revendication 6, dans laquelle l'activité catalytique peut être incorporée à la chaîne polymère en utilisant des acrylates ou méthacrylates d'alkyle à fonction amine.

9. La composition de revêtement de la revendication 1, dans laquelle le polyesteruréthanne est le produit de réaction d'un polyisocyanate et d'un polyester qui est le produit d'estérification d'un alkylène-glycol, d'un polyalcool ayant au moins trois groupes hydroxyle et d'un acide dicarboxylique aromatique ou de son anhydride.

10. La composition de revêtement de la revendication 9, dans laquelle le polyesteruréthanne-polyol a un

17

indice d'hydroxyle d'environ 75 à 200 et un poids moléculaire moyen en poids d'environ 3000 à 20 000.

**11.** La composition de revêtement de la revendication 5, dans laquelle le composant glycidylique comprend un éther polyglycidylique d'un polyol ou un ester di- ou polyglycidylique d'un acide.

**12.** La composition de revêtement de la revendication 11, dans laquelle le polymère acrylique d'anhydride est constitué de monomères polymérisés de méthacrylate de méthyle, acrylate de butyle et acide itaconique.

**13.** La composition de revêtement de la revendication 11, dans laquelle le polymère acrylique d'anhydride est constitué de monomères polymérisés d'acrylate de butyle, styrène, anhydride maléique et acide maléique.

**14.** La composition de revêtement de la revendication 5, dans laquelle le polymère acrylique d'anhydride est constitué essentiellement de monomères polymérisés de méthacrylate de méthyle, styrène, acrylate de butyle et anhydride itaconique ; le composant glycidylique consiste essentiellement en un éther polyglycidylique de sorbitol ou un ester di- ou polyglycidylique d'un acide ou un mélange d'entre eux, et le catalyseur est la triéthylènediamine ou la diméthyléthanolamine ou un mélange d'entre elles.

**15.** La composition de revêtement de la revendication 5, dans laquelle le polymère acrylique d'anhydride est constitué essentiellement de monomères polymérisés d'acrylate de butyle, styrène, anhydride maléique et acide maléique ; le composant glycidylique consiste essentiellement en un éther polyglycidylique de sorbitol ou un ester di- ou polyglycidylique d'un acide ou un mélange d'entre eux, et le catalyseur est la triéthylènediamine ou la diméthyléthanolamine ou un mélange d'entre elles.

**16.** La composition de revêtement de la revendication 1, contenant environ 0,1 à 200 % en poids de pigment, par rapport au poids du liant.

**17.** La composition de revêtement de la revendication 1, dans laquelle le polymère acrylique contient jusqu'à environ 40 % en poids de monomères polymérisés d'acrylate d'alkyle, méthacrylate d'alkyle ou de mélanges d'entre eux dont les groupes alkyles comptent 9 à 12 atomes de carbone.

**18.** Un substrat recouvert d'un revêtement formé par une couche de base aqueuse et une couche transparente de la composition de la revendication 1, dans lequel la couche de base et la couche transparente sont durcies à des températures ambiantes ou élevées.

**19.** Un substrat recouvert d'un revêtement formé par une couche de base au solvant réticulée par la mélamine et une couche transparente de la composition de la revendication 1, dans lequel la couche de base et la couche transparente sont durcies à des températures élevées.

**20.** Un substrat recouvert d'un revêtement formé par une couche de base de laque au solvant et d'une couche transparente de la composition de la revendication 1, dans lequel la couche de base et la couche transparente sont durcies à des températures ambiantes.